# FASCICULE DE BREVET EUROPEEN

(11) **EP 1 984 175 B1**
(45) Date de publication et mention de la délivrance du brevet: **30.12.2015**
(21) Numéro de dépôt: 07701741.6
(22) Date de dépôt: 31.01.2007
(51) Int. Cl.: H01M 10/0565, B32B 15/00, B32B 7/10, H01M 10/24, H01M 4/04, H01M 4/62, H01M 4/134, H01M 4/133, H01M 4/1391, H01M 4/136, H01M 4/1393, H01M 10/0525, H01M 4/1395, H01M 4/131, H01M 4/1397, H01M 4/36, H01M 10/0568, H01M 10/0569, H01M 4/485, H01M 4/58

(54) **MATERIAU MULTI-COUCHES, PROCEDE DE FABRICATION ET UTILISATION COMME ELECTRODE**
MEHRSCHICHTIGES MATERIAL, HERSTELLUNGSVERFAHREN DAFÜR UND VERWENDUNG ALS ELEKTRODE
MULTILAYER MATERIAL, METHOD FOR MAKING SAME AND USE AS ELECTRODE

(30) Priorité: 01.02.2006 CA 2535064
(43) Date de publication de la demande: 29.10.2008
(73) Titulaire: HYDRO-QUEBEC, Montréal Québec H2Z 1A4 (CA)
(72) Inventeur: ZAGHIB, Karim, Longueuil, QC J4M 2M7 (CA); PETITCLERC, Michel, Notre-Dame-du-Mont-Carmel, Québec G0X 310 (CA); CHAREST, Patrick, Sainte-Julie, QC J3E 1P2 (CA); GUERFI, Abdelbast, Brossard, QC J4X 1W2 (CA); DONTIGNY, Martin, Notre-Dame-du-Mont-Carmel QC G0X 3J0 (CA)
(74) Mandataire: Goulard, Sophie
(86) Numéro de dépôt international: PCT/CA2007/000141
(87) Numéro de publication internationale: WO 2007/087714

(56) Documents cités:
- WO-A2-2004/045007
- FR-A1- 2 823 013
- JP-A- 09 185 960
- KR-A- 20040 100 259
- US-A1- 2004 258 997
- US-A1- 2005 008 935
- US-A1- 2005 089 757
- US-A1- 2005 186 474
- US-A1- 2006 019 151
- US-A1- 2006 099 495
- US-B2- 6 887 617

## Description

### DOMAINE DE L'INVENTION

La présente invention est relative à des matériaux multi-couches comportant un support solide et au moins deux couches superposées solides qui contiennent des particules d'un matériau électrochimiquement actif. Ces matériaux multi-couches se caractérisent notamment par une faible interpénétration entre couches solides adjacentes.

La présente invention concerne également des procédés de préparation des matériaux multi-couches de l'invention, notamment ceux qui comportent une étape d'épandage d'un mélange comportant des particules de matériaux électrochimiquement actifs.

La présente invention est également relative aux électrodes multi-couches obtenues par le procédé de l'invention et qui présentent des propriétés mécaniques et électrochimiques remarquables.

Enfin, la présente invention concerne les générateurs électrochimiques qui incorporent au moins une électrode à base d'un matériau multi-couches de l'invention et qui se caractérisent par une sécurité exceptionnelle. Ces générateurs sont particulièrement adaptés pour une utilisation dans les systèmes électroniques portables et dans les véhicules hybrides, notamment grâce à une forte résistance en présence de surcharge.

### ÉTAT DE LA TECHNIQUE

L'intérêt des électrodes double-couches a récemment été signalé par Naoki Imachi et al., au cours du 46ème Symposium sur les batteries qui s'est déroulé du 16 au 18 novembre 2005 à Nagoya, au Japon, résumé pages 168 à 169, publié dans les Proceedings. Il y est mentionné qu'une cathode à double-couches, dont la première couche est à base de LiFePO₄, la deuxième couche à base de LiCoO₂ qui agit comme matériau actif, et le collecteur constitué d'une feuille d'aluminium, a un effet sur la tolérance à la surcharge basée sur le changement de résistance de Li₁₋ₓFePO₄ en rapport avec x. Cette cathode à double-couches, à base de LiFePO₄/LiCoO₂, bien qu'ayant amené un certain progrès, s'est montrée d'un intérêt limité.

Il existait donc un besoin pour la mise au point de matériaux d'électrodes dépourvus d'au moins un des inconvénients des matériaux connus et offrant notamment une bonne résistance aux surcharges.

### SOMMAIRE

L'invention a pour premier objet la famille des matériaux multi-couches comportant un support solide et au moins deux couches solides superposées qui contiennent des particules d'un matériau électrochimiquement actif, la première couche solide adhérant au support solide et la deuxième couche solide adhérant à la première couche solide. Ce matériau multi-couches est en outre caractérisé en ce qu'il présente au moins une des propriétés suivantes :
- une épaisseur de la première couche solide qui est, mesurée selon la méthode du microscope électronique, constante à 95 % ou plus, et de préférence constante à 97 % ou plus;
- une épaisseur de la deuxième couche solide qui est, mesurée selon la méthode du microscope électronique à balayage, constante à 95 % ou plus, et de préférence, constante à 97 % ou plus; et
- une profondeur de pénétration de la deuxième couche solide dans la première couche solide qui est inférieure à 10 % de l'épaisseur de la première couche solide, et de préférence inférieure à 5 %, de l'épaisseur de la première couche solide.

De préférence le matériau électrochimiquement actif peut être un oxyde complexe correspondant à la formule générale AₐMₘZ_{z}OₒNₙF_{f} dans laquelle:
- A comprend un métal alcalin;
- M comprend au moins un métal de transition, et optionnellement un métal autre qu'un métal de transition, ou leurs mélanges;
- Z comprend au moins un non-métal;
- O est l'oxygène; N l'azote et F le fluor; et
- les coefficients a, m, z, o, n, f ≥ 0 étant choisis de manière à assurer l'électroneutralité.

Une sous-famille préférentielle de matériaux multi-couches de l'invention peut être constituée par les matériaux multi-couches dans lesquels la première couche solide est d'une nature différente de celle du matériau électrochimiquement actif présent dans la deuxième couche solide.

Une autre sous-famille préférentielle de matériaux multi-couches de l'invention peut être constituée par les matériaux dans lesquels la première et la deuxième couche solides contiennent chacune un liant des particules électrochimiquement actives présentes dans ladite première et deuxième couche solide et le liant présent dans une couche solide représentant, de préférence, entre 0 et 99 %, plus préférentiellement encore, entre 1 et 95 % du poids de la couche solide dans lequel il est présent.

De préférence, le liant présent dans la première couche solide peut être d'une nature différente de celle du liant présent dans la deuxième couche solide.

Avantageusement, une des couches solides peut contenir un épaississant, l'épaississant présent dans une couche solide représentant, de préférence, entre 0 et 98 %, plus préférentiellement encore, entre 0 et 94 %, du poids de la couche solide dans lequel il est présent.

Le liant présent dans la première couche est, à 25°C, soluble dans un solvant S₁ à une concentration supérieure à 1 gramme par litre et le liant présent dans la deuxième couche solide est, à 25°C, soluble dans le solvant S₁ à une concentration inférieure à 1 gramme par litre.

Le liant présent dans la deuxième couche est, à 25°C, soluble dans un solvant S₂ à une concentration supérieure à 1 gramme par litre et le liant présent dans la première couche est, à 25°C, soluble dans le solvant S₂ à une concentration inférieure à 1 gramme par litre.

Le liand de l'une des couches est soluble dans l'eau et le liant de l'autre couche est PVDF ou PTFE.

Une sous-famille préférentielle de matériaux multi-couches de l'invention peut être constituée par les matériaux multi-couches comportant une troisième couche de protection, de préférence à base d'un matériau solide de type Li₃PO₄ adhérant à la deuxième couche solide sur la surface de la deuxième couche qui n'est pas au contact de la première couche.
Une sous-famille préférentielle de matériaux multi-couches de l'invention peut être constituée par les matériaux multi-couches pour cathode.
De façon avantageuse, dans ces matériaux multi-couches :
- la première couche solide peut être à base d'un matériau choisi dans le groupe constitué par les matériaux de type LiFePO₄, LiFePO₄ enrobé de carbone, FePO₄, FePO₄ enrobé de carbone, et de type mélange d'au moins deux de ces derniers; plus préférentiellement encore, la première couche peut être de type LiCoO₂, LiMn₂O₄, LiMn_{1/3}Co_{1/3}Ni_{1/3}O₂, LiNi_{X}Co_{Y}Al_{Z}O₂, (0 < x, y, z < 1), ou de type mélange d'au moins deux de ces matériaux; et/ou
- la deuxième couche solide peut être à base d'un matériau de type LiCoO₂, LiMn₂O₄, LiMn_{1/3}Co_{1/3}Ni_{1/3}O₂, LiNi_{X}Co_{Y}Al_{Z}O₂, (0 < x,y,z < 1), ou d'un mélange d'au moins deux de ces matériaux; plus préférentiellement encore, la deuxième couche peut être de type LiFePO₄, LiFePO₄ enrobé de carbone, FePO₄, FePO₄ enrobé de carbone, ou de type mélange d'au moins deux de ces derniers.

De façon avantageuse, le liant dans la première couche solide peut être de type liant soluble dans l'eau.

De façon également avantageuse, le liant dans la deuxième couche solide peut être de type PVDF ou PTFE.

De préférence, le liant dans la première couche peut être de type PVDF ou PTFE.

De préférence, le liant dans la deuxième couche peut être de type liant soluble dans l'eau.

Avantageusement, l'épaississant peut être de type Cellogene®.

Selon une combinaison particulièrement avantageuse, le liant dans la première couche solide peut être de type liant soluble à l'eau et le liant de la deuxième couche solide peut être de type NMP ou cyclopentanone.

Selon une autre combinaison particulièrement intéressante, le liant dans la première couche peut être de type NMP ou cyclopentanone et le liant de la deuxième couche peut être de type liant soluble à l'eau.

Une sous-famille préférentielle de matériaux multi-couches de l'invention peut être constituée par les matériaux multi-couches pour anode. Dans ces matériaux multi-couches, de préférence :
- la première couche solide peut être de type graphite naturel, de type graphite artificiel ou de type mélange d'au moins deux de ces derniers, et la seconde couche solide peut être de type Li₄Ti₅O₁₂, Sn, Al, Ag, Si, SiOx, SiO_{X}-graphite, SiO_{X}-Carbone, ou de type mélange d'au moins deux de ces derniers, avec x supérieur à 0 et inférieur ou égale à 2; ou
- la première couche solide peut être de type Li₄Ti₅O₁₂, Sn, Al, Ag, Si, SiOₓ, SiOₓ-graphite, SiOx-Carbone, et la seconde couche solide peut être de type graphite naturel, graphite artificiel, ou de type mélange d'au moins deux de ces derniers, avec x supérieur à 0 et inférieur ou égale à 2.

Selon un mode avantageux de réalisation, le liant présent dans la première couche solide peut être alors soluble dans l'eau.

Selon un autre mode avantageux de réalisation, la première couche solide peut contenir un épaississant de type Cellogène®.

Avantageusement, le liant présent dans la deuxième couche solide du matériau multi-couches peut être du PVDF.

De préférence, le liant présent dans la première couche solide peut être du PVDF ou PTFE.

Avantageusement, le liant utilisé dans la première couche solide peut être du PVDF ou PTFE et du NMP ou cyclopentanone.

De façon encore plus avantageuse, le liant présent dans la deuxième couche solide peut être soluble dans l'eau.

De préférence, le liant utilisé dans la deuxième couche solide peut être du PVDF ou PTFE et du NMP.

Selon une variante d'un intérêt particulier, le liant utilisé dans la deuxième couche solide peut être soluble dans l'eau.

Une sous famille préférentielles de matériaux multi-couches de l'invention peut être constituée par les matériaux dans lesquels le support solide est constitué d'un matériau choisi :
- dans le cas d'une anode : dans le groupe constitué par le cuivre, l'aluminium et le nickel, et de préférence le cuivre; et
- dans le cas d'une cathode : dans le groupe constitué par l'aluminium, l'aluminium carboné, le titane et le platine, de préférence dans le groupe constitué par l'aluminium, et l'aluminium carboné.

De préférence, dans les matériaux multi-couches de l'invention, l'épaisseur de :
- la première couche peut être comprise entre 1 et 200 µm, de préférence entre 10 et 120 µm;
- la deuxième couche peut être comprise entre 1 et 200 µm, de préférence entre 10 et 120 µm; et
- la couche protectrice peut être comprise entre 500 nanomètres et 16 µm, de préférence entre 1 et 5 µm.

Une sous-famille particulièrement intéressante de matériaux de l'invention peut être composée par les matériaux multi-couches pour anode comportant un support solide et deux couches solides superposées :
- la première couche solide comportant :
   - entre 1 et 100, de préférence entre 15 et 97 % en poids d'un matériau actif;
   - entre 0 et 99, de préférence entre 2 et 84 % en poids d'un liant;
   - entre 0 et 98, de préférence entre 1 et 83 % en poids d'un épaississant, et
- la deuxième couche solide comportant :
   - entre 1 et 100, de préférence entre 15 et 97 % % en poids d'un matériau actif;
   - entre 0 et 99, de préférence entre 2 et 84 % en poids d'un liant et;
   - entre 0 et 98, de préférence entre 1 et 83 % en poids d'un épaississant.

Une sous-famille particulièrement intéressante de matériaux de l'invention peut être composée par les matériaux multi-couches pour cathode comportant un support solide et deux couches solides superposées :
- la première couche solide comportant :
   - entre 1 et 100, de préférence entre 15 et 97 % % en poids d'un matériau actif;
   - entre 0 et 98, de préférence entre 2 et 84 % en poids d'un liant;
   - entre 0 et 99, de préférence entre 1 et 83 % en poids d'un épaississant, et
- la deuxième couche solide comportant :
   - entre 1 et 100, de préférence entre 15 et 97 % % en poids d'un matériau actif et;
   - entre 0 et 98, de préférence entre 2 et 84 % en poids d'un liant et;
   - entre 0 et 99, de préférence entre 1 et 83 % en poids d'un épaississant.

Une autre sous-famille particulièrement intéressante de matériaux multi-couches pour anode peut comporter un support solide, deux couches solides superposées et une couche de protection :
- la première couche solide comporte :
   - entre 1 et 100, de préférence entre 15 et 97 % % en poids d'un matériau actif;
   - entre 0 et 99, de préférence entre 2 et 84 % en poids d'un liant; et
   - entre 0 et 98, de préférence entre 1 et 83 % en poids d'un épaississant,
- la deuxième couche solide comportant :
   - entre 1 et 100, de préférence entre 15 et 97 % en poids d'un matériau actif;
   - entre 0 et 99, de préférence entre 2 et 84 % en poids d'un liant; et
   - entre 0 et 98, de préférence entre 1 et 83 % en poids d'un épaississant
- la couche de protection comportant :
   - entre 1 et 100, de préférence entre 15 et 97 % en poids d'un matériau actif;
   - entre 0 et 99, de préférence entre 2 et 84 % en poids d'un liant; et
   - entre 0 et 98, de préférence entre 1 et 83 %en poids d'un épaississant.

Une autre sous-famille préférentielle peut être constituée par les matériaux multi-couches pour cathode comportant un support solide, deux couches solides superposées et une couche de protection :
- la première couche solide comportant :
   - entre 1 et 100, de préférence entre 15 et 97 % en poids d'un matériau actif;
   - entre 0 et 99, de préférence entre 2 et 84 % en poids d'un liant; et
   - entre 0 et 98, de préférence entre 1 et 83 % en poids d'un épaississant,
- la deuxième couche solide comportant :
   - entre 1 et 100, de préférence entre 15 et 97 % en poids d'un matériau actif;
   - entre 0 et 99, de préférence entre 2 et 84 % en poids d'un liant; et
   - entre 0 et 98 %, de préférence entre 1 et 83 en poids d'un épaississant
- la couche de protection comportant :
   - entre 1 et 100, de préférence entre 15 et 97 % en poids d'un matériau actif;
   - entre 0 et 99, de préférence entre 2 et 84 % en poids d'un liant; et
   - entre 0 et 98, de préférence entre 1 et 83 % en poids d'un épaississant.

Une autre sous-famille préférentielle de matériaux multi-couches selon l'invention peut être constituée par les matériaux dans lesquels :
- le support a une épaisseur comprise entre 1 et 100 µm
- la première couche a une épaisseur comprise entre 1 et 200 µm;
- la deuxième couche solide a une épaisseur comprise entre 1 et 200 µm
- la couche de protection a, lorsque présente, une couche comprise entre 0,5 et 5 µm.

Un deuxième objet de la présente invention est constitué par les procédés pour la préparation d'un matériau multi-couches comportant un support solide et au moins deux couches solides superposées,
- la première couche solide qui contient des particules d'un premier matériau électrochimiquement actif, liées entre elles par un liant des dites particules, adhérant au support solide; et
- la deuxième couche solide qui contient des particules d'un deuxième matériau électrochimiquement actif, liées entre elles ou non par un liant desdites particules, étant d'une nature différente de celle du matériau électrochimiquement actif présent dans la première couche solide,
ces procédés comprenant :
- au moins les étapes suivantes :
   a) d'épandage, sur le support solide, d'un mélange comprenant les particules du premier matériau électrochimiquement actif, un liant de ce premier matériau électrochimiquement actif, et le solvant du liant;
   b) d'évaporation du solvant encore présent dans la première couche après épandage et de formation de la première couche solide;
   c) d'épandage sur la première couche solide d'un mélange comprenant les particules du deuxième matériau électrochimiquement actif, un liant du deuxième matériau électrochimiquement actif, et un solvant du liant; et
   d) d'évaporation du solvant présent dans la seconde couche après épandage et de formation de la deuxième couche solide,

De préférence, selon un mode avantageux de réalisation des procédés de l'invention, le mélange solvant liant utilisé dans l'étape c) ne peut pas dissoudre la première couche solide ou ne peut la dissoudre que très faiblement, et ce, de préférence, à une valeur inférieure à 1 gramme par litre à 25°C.

Les procédés de l'invention peuvent être avantageusement utilisés pour la fabrication de cathodes.

La fabrication de la première couche solide peut être avantageusement réalisée par Doctor Blade ou par extrusion sur un collecteur d'aluminium et la deuxième couche peut être épandue sur la première couche.

Selon une autre variante d'intérêt, la fabrication de la première couche peut être obtenue par épandage vertical sur un collecteur d'aluminium de type "expanded metal" la deuxième couche pouvant être obtenue par épandage vertical sur la première couche.

La fabrication de la deuxième couche peut être avantageusement obtenue par Doctor Blade ou par extrusion sur la première couche.

La deuxième couche peut être de préférence épandue sur un support PP (polypropylène), puis transférée par laminage sur la première couche.

Avantageusement, le liant utilisé pour fabriquer les deux couches peut être de type PVDF ou PTFE et le solvant utilisé peut être de type NMP ou cyclopentanone, le solvant utilisé pour préparer la deuxième couche ne devant pas dissoudre le liant de la première couche.

Selon un autre mode avantageux de réalisation de l'invention, au moins un des couches peut être préparée par au moins une des techniques choisie dans le groupe constituée par les techniques : Plasma, évaporation, CVD, pulvérisation, et les mélanges d'au moins deux de ces techniques.

Le liant utilisé pour la fabrication de la première couche peut être différent du liant utilisé pour la fabrication de la deuxième couche.

Les procédés de l'invention peuvent être avantageusement utilisés pour la fabrication de matériaux multi-couches pour cathode.

La première couche solide peut être alors avantageusement à base, de préférence constituée, de matériaux de type LiFePO₄.

De préférence, la deuxième couche solide peut être alors à base, de préférence constituée, d'un matériau choisi dans le groupe constitué par les matériaux de type LiCoO₂, LiMn₂O₄, LiMn_{1/3}Co_{1/3}Ni_{1/3}O₂, LiNi_{X}Co_{Y}Al_{Z}O₂, (0 < x, y, z < 1), et par les matériaux de type mélanges d'au moins deux de ces derniers.

Selon un mode préférentiel, la première couche peut être de type LiCoO₂, LiMn₂O₄, LiMn_{1/3}CO_{1/3}Ni_{1/3}O₂, LiNi_{X}Co_{Y}Al_{Z}O₂, (0 < x, y, z < 1), ou leur mélange, et la deuxième couche est de type LiFePO₄, LiFePO₄ enrobé de carbone, FePO₄, FePO₄ enrobé de carbone, ou de type mélanges d'au moins deux de ces derniers.

Le liant de la première couche solide peut être avantageusement de type liant soluble dans l'eau.

Le liant dans la deuxième couche solide peut être de préférence de type PVDF ou PTFE.

Selon une autre variante, le solvant utilisé pour l'épandage peut être avantageusement de type aqueux.

Selon une autre variante d'un intérêt particulier, le solvant utilisé pour l'épandage peut être de type NMP ou cyclopentanone.

Le liant de la première couche solide peut être, de préférence, de type PVDF ou PTFE.

Le liant dans la deuxième couche solide peut être, avantageusement, de type liant soluble dans l'eau.

De préférence, le solvant utilisé pour l'épandage peut être de type NMP ou cyclopentanone.

Avantageusement, le solvant utilisé pour l'épandage peut être de type eau.

Le procédé peut être particulièrement intéressant lorsque le liant de la première couche solide est de type liant soluble à l'eau et le liant de la deuxième couche solide est de type NMP ou cyclopentanone.

Le procédé peut être particulièrement avantageux lorsque l'épandage de la première couche solide est de type eau et celui utilisé pour l'épandage de la deuxième couche solide de type NMP ou cyclopentanone.

Avantageusement, le liant de la première couche solide peut être de type NMP ou cyclopentanone et le liant de la deuxième couche solide de type liant soluble à l'eau.

Lorsque le solvant utilisé pour l'épandage de la première couche solide est de type eau, celui utilisé pour l'épandage de la deuxième couche solide peut être avantageusement de type sans solvant.

Les procédés de l'invention présentent un intérêt particulier dans la préparation d'électrodes de type anode. Dans ce cas, la première couche solide peut être avantageusement de type graphite naturel ou artificiel et la seconde couche solide peut être de type Li₄Ti₅O₁₂, Sn, Al, Ag, Si , SiO_{X}, SiO_{X}-graphite, SiO_{X}-carbone avec x supérieur à 0 et inférieur ou égale à 2.

Selon une autre variante, la première couche solide peut être de type Li₄Ti₅O₁₂, Sn, Al, Ag, Si, SiO_{X}, SiO_{X}-graphite, SiO_{X}-carbone, avec x supérieur à 0 et inférieur ou égale à 2, et la seconde couche solide peut être de type graphite naturel ou artificiel.

Selon une variante intéressante du procédé, le liant et solvant utilisés dans la première couche peuvent être respectivement un liant soluble dans l'eau et de l'eau.

Selon une autre variante intéressante, le liant et le solvant utilisés pour la préparation de la première couche peuvent être respectivement PVDF ou PTFE et NMP ou cyclopentanone.

Selon une autre variante avantageuse, le liant et le solvant utilisés pour la préparation de la deuxième couche peuvent être respectivement PVDF ou PTFE et du NMP ou cyclopentanone.

De préférence, le liant et le solvant utilisés dans la deuxième couche peuvent être respectivement un liant soluble dans l'eau et de l'eau.

Un troisième objet de la présente invention est constitué par les matériaux multi-couches obtenus par mise en oeuvre d'un des procédés définis dans le deuxième objet de la présente invention.

Un quatrième objet de la présente invention est constitué par les générateurs électrochimiques comprenant au moins une anode, au moins une cathode et au moins un électrolyte. Ces générateurs sont caractérisés en ce qu'ils contiennent au moins une électrode contenant un des matériaux défini dans le premier objet de l'invention ou tel qu'obtenu par un des procédés définis dans le deuxième objet de l'invention.

Des sous-familles préférentielles de générateurs de l'invention correspondent :
- aux générateurs électrochimiques de type Cathode/Électrolyte/Anode; et
- aux générateurs électrochimiques de type électrolyte liquide, avantageusement alors l'électrolyte étant de type gel.

De préférence, dans les générateurs de l'invention, l'électrolyte peut être composé d'au moins un sel et un solvant.

Avantageusement, dans de tels générateurs électrochimiques, le sel peut être choisi dans le groupe constitué par les sels de type LiFSI, LiTFSI, LiBF₄, LiPF₆, LiClO₄, LiCF₃SO₂, LiBETI, LiBOB, LiDCTA, et par les mélanges d'au moins 2 de ces derniers.

De préférence, le solvant peut être choisi dans le groupe des solvants de type EC, DEC, PC, DMC, EMC, GBL, et les mélanges d'au moins deux de ces derniers.

Selon un autre mode avantageux, l'électrolyte gel peut être formé au moins d'un polymère, d'un sel et d'un plastifiant. Dans ce cas, le polymère peut être préférentiellement choisi dans le groupe des polymères de type polyéther, PVDF, PAN, PMMA, et parmi les mélanges d'au moins deux de ces derniers.

Selon un autre mode avantageux, le sel peut être choisi dans le groupe des sels de type LiFSI, LiTFSI, LiBF₄, LiPF₆, LiClO₄, LiCF₃SO₂, LiBETI, LiBOB, LiDCTA, et les mélanges d'au moins deux de ces derniers.

Avantageusement, dans les générateurs de l'invention, le plastifiant peut être choisi parmi les plastifiants de type EC, DEC, PC, DMC, EMC, GBL, TESA, VC, et les mélanges d'au moins deux de ces derniers.

La formation du gel peut être alors réalisée thermiquement par IR, UV, "Electron-Beam" ou par un mélange d'au moins deux de ces techniques.

Les générateurs électrochimiques de l'invention sont caractérisés par le fait qu'ils sont sécuritaires et résistants aux surcharges.

Ces générateurs électrochimiques sont également caractérisés en ce que la température dans le générateur, en présence d'une surcharge supérieure ou égale à 12 volts, est inférieure à 80°C.

Une sous famille préférentielle de générateurs de l'invention peut être constituée par les générateurs qui présentent moins de 100 ppm, et de préférence aucune trace de dépôt de lithium métallique lors d'une charge rapide.

Un cinquième objet de la présente invention est constitué par les cathodes à base d'au moins un matériau multi-couches pour cathode précédemment défini dans les le premier et le second objet ou tels qu'obtenus par les procédés du troisième objet de l'invention.

Une sous-famille préférentielle de ces cathodes peut être constituée par celles dans lesquelles au moins un des matériaux électrochimiquement actif présent dans le matériau multicouches est basique et, de préférence, choisi dans le groupe constitué par les particules de LiFePO₄, Li₃PO₄ et les mélanges de ces derniers.

Avantageusement, au moins un des matériaux électrochimiquement actif présent dans le matériau multi-couches peut être enrobé par une couche d'un matériau basique.

Un sixième objet de la présente invention est constitué par les anodes à base d'au moins un matériau multi-couches pour anodes précédemment défini dans les le premier et le second objet ou tels qu'obtenus par les procédés du troisième objet de l'invention.

Une sous-famille préférentielle de ces anodes peut être constituée par celles dans lesquelles au moins un des matériaux électrochimiquement actif présent dans le matériau multi-couches est un réservoir de capacité dont la capacité est d'au moins 10 % de la capacité totale de l'anode.

De préférence, le matériau réservoir de capacité peut être choisi dans le groupe constitué par Li₄Ti₅O₁₂, Ag, Sn, Si, Al, SiO_{X}, SiO_{X}-graphite, SiO_{X}-carbone, avec x supérieur à 0 et inférieur ou égale à 2, et les mélanges d'au moins deux de ces derniers.

Un septième objet de la présente invention est constitué par les matériaux multi-couches selon le premier objet, ou tel qu'obtenu par l'un des procédés selon le deuxième objet de l'invention, et dans lequel le matériau conducteur électronique est de type carbone, graphite, fibre, ou mélange d'au moins deux de ces derniers. Dans ce cas, le carbone peut être, de préférence, de type Ketjen, Shawinigan, Denca, ou de type mélanges d'au moins deux de ces derniers. Plus avantageusement encore, le graphite peut être de type artificiel ou naturel. Dans ce cas, la fibre peut être de type VGCF ("vapour growth carbon fibre"), exmésophase, expal(polvinylacronitrile), ou de type mélange d'au moins deux de ces derniers.

Un huitième objet de la présente invention est constitué par les procédés selon le deuxième objet pour la préparation d'un matériau selon l'un des premier, quatrième et cinquième objets, utilisant :
- une solution aqueuse particulièrement adaptée pour l'épandage sur un support d'anode qui est formulée comme suit, les pourcentages étant formulés en poids :
   - au moins 64 % de graphite; et
   - au moins 3 % de liant soluble dans l'eau,
   - de 0,1 à 2 % d'épaississant; et
   - au plus 27 % d'eau, ou
- une solution aqueuse particulièrement adaptée pour l'épandage sur un support de cathode qui est formulée comme suit, la solution aqueuse utilisée pour l'épandage contient en poids :
   - au moins 64 % de LiFeP04; et
   - au moins 3 % d'un liant soluble dans l'eau;
   - de 0,1 à 2 % d'un épaississant; et
   - au plus 27 % d'eau.

### DESCRIPTION BRÈVE DES DESSINS

La Figure 1 représente une des configurations de matériau multi-couches de l'invention selon les variantes I, II, III et IV explicitées.
La Figure 2 représente une des configurations possibles pour les matériaux multi-couches de l'invention, pour l'anode et pour la cathode et dans lesquelles les couches adjacentes ont été préparées avec différents systèmes aqueux/organiques; ces configurations diffèrent de celles représentées dans la Figure 1 en ce que le matériau actif présent dans les couches A et A' est maintenant présent respectivement dans les couches B et B'.
La Figure 3 représente la préparation d'un matériau multi-couches de l'invention par transfert de la couche B, initialement attachée au support PP, sur la couche A.
La Figure 4 représente un matériau multi-couches de l'invention dans lequel la couche A a été obtenue par pulvérisation (sans liant) du matériau actif A sur le support solide 1.
La Figure 5 représente, pour le cas 1, un matériau multi-couches de l'invention dans lequel le matériau actif incorporé dans la deuxième couche est constitué de particules d'un matériau actif enrobé par des particules de plus petites tailles de LiFePO₄, dans le cas 2 et le cas 3 qui représente un agrandissement du cas 2, une comparaison de la forme d'une section de matériau multi-couches de l'art antérieur dans lequel le même liant est présent dans les deux couches avec la forme d'un matériau de l'invention (cas 1) dans lequel le liant n'est pas le même dans les deux couches.
La Figure 6 représente un matériau multi-couches de l'invention dans lequel un matériau électrochimiquement actif est constitué par des particules enrobées par une couche de particules basiques.
La Figure 7 représente un matériau multi-couches de l'invention dans laquelle matériau électrochimiquement actif présent dans au moins une couche solide est conducteur ionique.

### DESCRIPTION DÉTAILLÉE DES RÉALISATIONS PRÉFÉRÉES

Dans le cadre de cette divulgation, l'expression "électrode multi-couches" s'apparente à une électrode caractérisée par une superposition d'au moins deux couches à sa surface.

Dans le cadre de cette divulgation, la "constance de l'épaisseur d'une couche" est mesurée par la méthode du microscope électronique à balayage (MEB). Dans le cas de la présente invention, le MEB utilisé est un HITACHI S-3500N avec calculateur intégré. L'appareil est muni d'un programme qui donne la mesure de l'épaisseur de chaque millimètre linéaire de l'échantillon. Les valeurs obtenues sont exploitées à l'aide du programme Excel® et présentées sous formes de courbes bidimensionnelles : longueur de l'échantillon et épaisseurs mesurées sur chaque millimètre du segment. La mesure des écarts entre la valeur moyenne de l'épaisseur de l'échantillon et les valeurs extrêmes mesurées permet de déterminer la constance. Ainsi, une épaisseur moyenne d'échantillon de 40 micromètres constante à 95 % signifie que l'épaisseur moyenne varie entre 38 et 42 micromètres.

Dans le cadre de cette divulgation, la "profondeur moyenne de pénétration d'une couche dans une autre" est mesurée par la méthode du microscope électronique à balayage (MEB), et représente la moyenne statistique des pénétrations mesurées tous les millimètres linéaires de l'échantillon.

Dans le cadre de cette divulgation, le terme "épandage" représente une méthode de couchage d'électrode sur un support.

Dans le cadre de cette divulgation, un liant a pour fonction de lier chimiquement les particules d'un matériau électrochimiquement actif présentes dans une solution et aussi lorsqu'elles sont présentes dans la couche solide.

Dans le cadre de cette divulgation, un épaississant a pour fonction d'augmenter la viscosité de la solution du mélange à épandre et qui contient les particules d'un matériau électrochimiquement actif et le liant, ainsi que le solvant.

Toutes sortes de liants sont utilisables. Ceux décrits dans la demande internationale WO 2004/045 007 et dans la demande européenne correspondante portant le numéro EP 1,573,834 (HYDRO-QUÉBEC) sont particulièrement avantageux dans le cadre de la préparation des structures multi-couches de l'invention, et plus particulièrement dans le cadre des techniques de préparation de couches solides par épandage à partir d'au moins un mélange aqueux d'un matériau électrochimiquement actif.

De préférence, le liant et l'épaississant retenus sont généralement pour au moins 20 % solubles dans l'eau lorsqu'on les introduits, à température ambiante, à raison de 20 grammes dans 100 grammes d'eau. De préférence, ils sont solubles pour au moins 50 % et plus avantageusement encore pour au moins 90 %.

Plus avantageusement encore, l'épaississant est soluble dans l'eau et peut être choisi dans le groupe constitué par les celluloses naturels, les celluloses modifiées physiquement et/ou chimiquement; les polysaccharides naturels, les polysaccharides modifiés chimiquement et/ou physiquement et qui présentent un poids moléculaire compris entre 27000 et 250000.

L'épaississant est avantageusement choisi dans le groupe constitué par les carboxyméthylcelluloses, les hydroxyméthylcelluloses, et les méthyléthylhydroxy celluloses.

Selon un mode préférentiel, l'épaississant est choisi dans le groupe constitué par les carboxyméthylcelluloses de type Cellogen®, commercialisées par la Société Dai-Ichi Kogyo Seiaku Co. Ltd au Japon, notamment sous les appellations commerciales EP, 7A, WSC, BS-H et 3H.

Le liant soluble est avantageusement sélectionné dans le groupe constitué par les caoutchoucs naturels et/ou synthétiques.

Le liant est de type non fluoré ou de type faiblement fluoré. En effet, à titre d'exemple, LiF n'étant pas soluble dans l'eau, il ne peut être utilisé dans le contexte de l'invention.

Parmi les caoutchoucs, ceux de type synthétiques, et plus particulièrement ceux choisis dans le groupe constitué par les SBR, (Styrène Butadiène Rubber), les NBR (butadiene-acrylonitrile rubber), les HNBR (NBR hydrogénés), les CHR (epichlorhydrines rubber) et les ACM (acrylate rubber), sont particulièrement avantageux.

Les caoutchoucs solubles utilisés, et notamment ceux de la famille du SBR se présentent de préférence sous forme d'une pâte.

On peut citer à titre d'exemple, le SBR commercialisé par la société NIPPON ZEON'S BINDER BATTERY GRADE sous l'appellation commerciale (BM-400B) ou équivalent et les épaississants de type Cellogen® connus sous les abréviations EP et/ou 3H.

Habituellement, le rapport épaississant/liant varie de 10 à 70 %, de préférence de 30 à 50 %. La teneur en liant est avantageusement comprise entre 1 et 70 %, et celle en épaississant entre 1 et 10 %, dans une solution aqueuse.

Dans le cas où on utilise le PVDF comme liant, sa teneur est de 3 à 40 % et celle du matériau actif est de 60 à 97 %.

Une solution aqueuse particulièrement adaptée pour l'épandage sur un support d'anode peut être formulée comme suit, les pourcentages étant formulés en poids :
- au moins 64 % de graphite; et
- au moins 3 % de liant soluble dans l'eau,
- de 0,1 à 2 % d'épaississant; et
- au plus 27 % d'eau.

Une solution aqueuse particulièrement adaptée pour l'épandage sur un support de cathode peut être formulée comme suit, la solution aqueuse utilisée pour l'épandage contient en poids:
- au moins 64 % de LiFePO₄; et
- au moins 3 % d'un liant soluble dans l'eau,
- de 0,1 à 2 % d'un épaississant; et
- au plus 27 % d'eau.

Lors de la mise en oeuvre du procédé, on assèche l'électrode en éliminant, de préférence, pour au moins 95 %, l'eau présente dans la solution utilisée pour réaliser l'étape d'épandage.

Diverses techniques connues de la personne de la technique considérée sont utilisables pour éliminer les traces de H₂O présentes à la surface de l'électrode, après le recouvrement de cette dernière par la solution aqueuse. Ces traces sont notamment éliminées par voie thermique en ligne du procédé EXT, DBH et/ou DB ou par infrarouge à une température avantageusement comprise entre 80 et 130°C pour une durée comprise entre 1 et 12 heures.

Dans le cadre de cette divulgation, le terme "collecteur" s'apparente à un support d'électrode qui est électrochimiquement inactif et conducteur électronique.

Dans le cadre de cette divulgation, l'expression "Doctor Blade" représente une méthode d'épandage en mode vertical.

Dans le cadre de cette divulgation, le terme "extrusion" représente une méthode d'épandage particulière dans laquelle le mélange à épandre est envoyé sous pression dans une filière afin d'accélérer le processus d'épandage.

Dans le cadre de cette divulgation, le terme "calandrage" représente un pressage d'électrodes pour obtenir une densité optimale d'électrode que l'on exprime en grammes par cm³.

Dans le cadre de cette divulgation, en ce qui concerne le pH des particules de matériaux électrochimiquement actifs (MEA), le pH d'un MEA représente la valeur mesurée, à l'aide d'une électrode classique en verre, dans une solution du MEA obtenue par dissolution, dans les conditions normales de température et de pression, de 0,15 gramme du MEA dans 10 cc d'eau. On laisse reposer pendant une semaine dans les conditions normales de température, puis on agite juste avant de prendre la mesure avec un appareil OAKTON série 2100, commercialisé par la société OAKTON. Dans le cadre de la présente invention, on classifie comme MEA acide tout échantillon dont le pH est inférieur à 7 et comme MEA basique tout échantillon dont le pH est supérieur à 7.

Dans le cadre de cette divulgation, les "techniques physiques" comprennent les techniques comme plasma, évaporation, pulvérisation, et toutes techniques analogues bien connues par la personne de l'art.

Dans le cadre de cette divulgation, les "techniques chimiques" comprennent celles telles que : la Chemical Vapor Deposition (CVD) ou le spin coating.

La préparation d'un matériau multi-couches de type (PVDF, LSE) ou (LES,PVDF) - LES étant l'abréviation pour Liant Soluble dans l'Eau - et l'utilisation de liant hybride dans une cathode ou anode à multi-couches sont expliqués ci-après.

Un mode particulièrement avantageux de réalisation de l'invention réside dans un procédé d'épandage multi-couches utilisant deux liants ayant des chimies différentes : l'une étant à base d'un système non aqueux et l'autre à base d'un système aqueux.

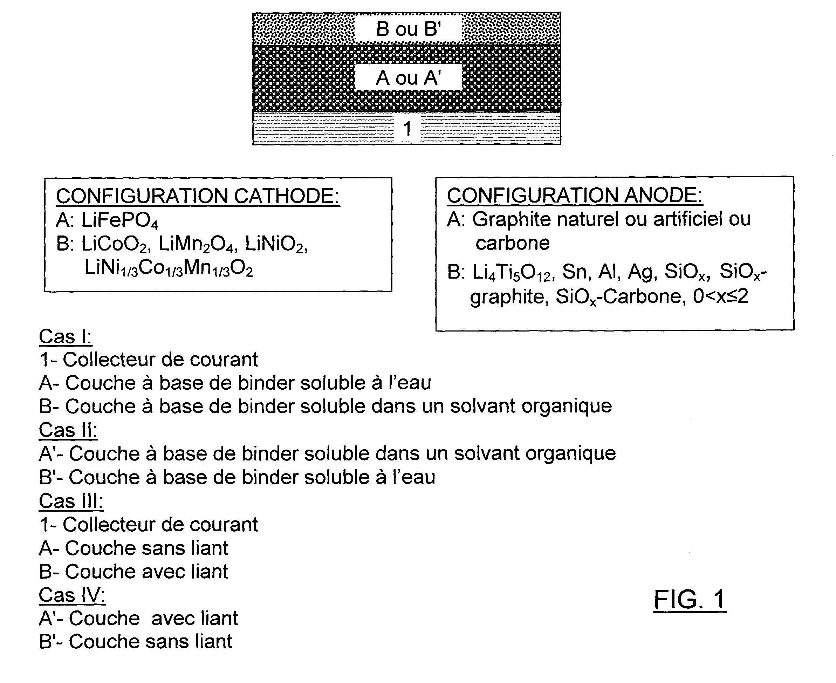

Cathode - La cathode est constituée au minimum de deux couches de matériaux actifs respectivement A et B, tel que décrit par la Figure 1.

Dans le cas I, la couche A est de type LiFePO₄ avec un liant soluble dans l'eau. L'épaisseur de la couche A peut être supérieure ou inférieure à celle de la couche B. L'épandage de la cathode A est à 100% à base d'eau. La cathode B est constituée soit de LiCoO₂, LiMn₂O₄, LiNiO₂, LiMn_{1/3}Co_{1/3}Ni_{1/3}O₂ ou d'un mélange d'au moins deux de ces derniers. Le liant utilisé pour la couche B est à base du PVDF ou du PTFE. L'épaisseur de cette couche B peut être supérieure ou inférieure à la couche A. Le solvant utilisé pour l'épandage de la couche B est organique, de préférence de type NMP ou cyclopentanone.

Du fait que l'on utilise des solvants d'épandage différents dans les couches A et B, le liant de la couche interne A n'est pas solubilisé par le solvant de la couche externe B. De plus, il donne de la stabilité mécanique et chimique à la couche A (Figure 1), particulièrement du fait que le liant n'est pas soluble dans le solvant utilisé pour préparer la deuxième couche.

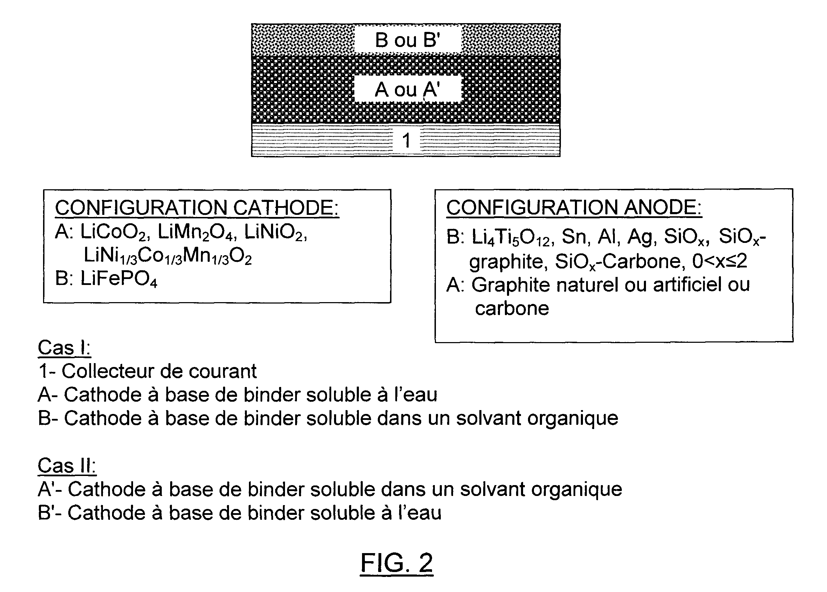

Dans le cas II, la couche A' est de type LiFePO₄, et un liant de type du PVDF ou PTFE soluble dans un solvant de type NMP ou cyclopentanone est utilisé. L'épaisseur de la couche A' peut être supérieure ou inférieure à celle de la couche B'. La couche B' est constituée soit de LiCoO₂, LiMn₂O₄, LiNiO₂, LiMn_{1/3}Co_{1/3}Ni_{1/3}O₂ ou leur mélange. Le liant utilisé pour l'épandage de la couche B est à base d'eau et le solvant utilisé est constitué de 100% d'eau. L'épaisseur de cette couche B' peut être supérieure ou inférieure à la couche A' (Figure 2).

Le procédé de fabrication se fait par la technique de Doctor Blade ou par extrusion sur un collecteur d'aluminium. La première couche est épandue sur le collecteur d'aluminium, la deuxième couche est épandue sur la première couche sans dissolution ou déformation significative de la couche interne A ou A'.

D'autres procédés d'épandage peuvent être utilisés tels que l'épandage vertical sur grille d'aluminium (expanded metal). La première couche A ou A' est épandue sur la grille d'aluminium, la deuxième couche B ou B' est étendue sur la première couche A ou A' sans dissolution ou déformation significative de la couche interne A ou A'.

Dans le cas III, dans un autre mode avantageux de réalisation de l'invention, les deux couches sont préparées à partir du même liant et du même solvant. La première couche A est épandue sur le collecteur en aluminium. La couche B est épandue sur un Polypropylène (PP). Tout de suite après, la couche B est transférée sur la couche A par laminage. Les deux couches sont préparées à partir de PVDF ou de PTFE dissout dans le NMP ou dans la cyclopentanone.

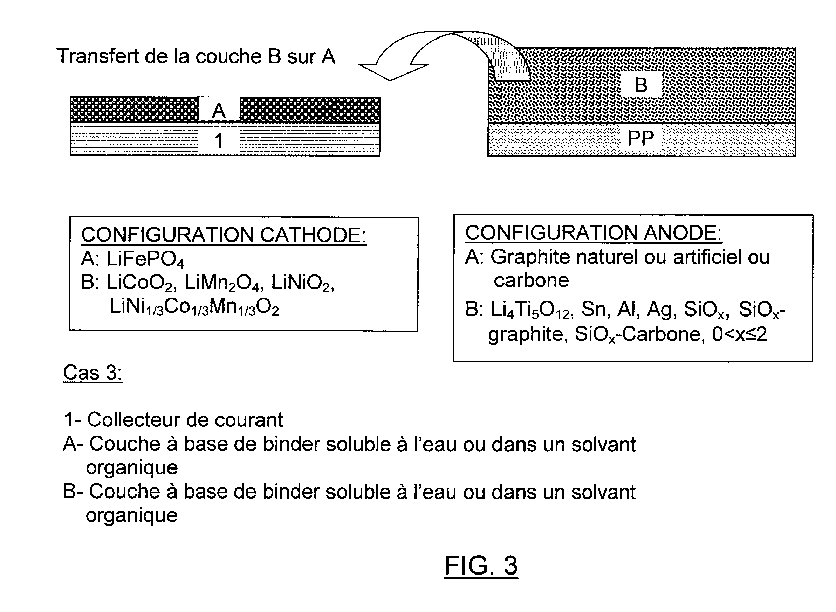

Dans un second cas, les deux couches sont préparées à partir d'un liant soluble dans l'eau et le solvant utilisé est constitué de 100% d'eau (Figure 3).

Dans les deux configurations, l'épaisseur la couche A peut être supérieure ou inférieure celle de la couche B.

D'autres procédés d'épandage peuvent être utilisés tel que l'épandage vertical sur grille de cuivre (expanded metal). La première couche A est épandue sur un film de cuivre. La deuxième couche B est étendue sur un film de PP. Puis cette dernière couche B est transférée sur la première couche A par laminage sans aucune déformation de la couche interne A.

### Anode

Dans le cas I, la première couche A est de type graphite naturel ou artificiel, le liant est de type soluble à l'eau. Le solvant utilisé pour l'épandage de la couche A est constitué de 100% d'eau. L'épaisseur de cette couche A peut être supérieure ou inférieure à la couche B. La couche B est composée de carbone dur (hard carbon), Li₄Ti₅O₁₂, Sn, Al, Ag, Si, SiO_{X}, SiO_{X}-graphite, SiO_{X}-carbone, avec x supérieur à 0 et inférieur ou égale à 2. Le liant utilisé dans cette couche B est de type PVDF ou PTFE et le solvant utilisé est de type NMP ou cyclopentanone (Figure 1).

Dans le cas II, la couche A' est de type graphite naturel ou artificiel utilisé avec un liant de type PVDF ou PTFE soluble dans un solvant de type NMP ou cyclopentanone. L'épaisseur de la couche A' peut être supérieure ou inférieure à celle de la couche B'.

La couche B' est composée de carbone dur ("hard carbon"), Li₄Ti₅O₁₂, Sn, Al, Ag, Si, SiO_{X}, SiO_{X}-graphite, SiO_{X}-carbone ou autre, avec x supérieur à 0 et inférieur ou égale à 2. Le liant utilisé dans cette couche B' est à base d'eau et le solvant utilisé est constitué de 100% d'eau. L'épaisseur de cette couche B' peut être supérieure ou inférieure à la couche A'.

La fabrication de l'anode multi-couches se fait par la technique de Doctor Blade ou par extrusion sur un collecteur de cuivre. La première couche est épandue sur le collecteur de cuivre, la deuxième couche B ou B' est épandue sur la première couche sans aucune dissolution ou déformation de la couche interne A ou A'.

D'autres procédés d'épandage peuvent être avantageusement utilisés, à savoir l'épandage vertical sur grille de cuivre ("expanded metal"). La première couche A ou A' est épandue sur la grille de cuivre, la deuxième couche B ou B' est étendue sur la première couche A ou A' sans aucune dissolution ou déformation significative de la couche interne A ou A'.

Dans le cas III, dans un autre mode préférentiel de réalisation de l'invention, les deux couches sont préparées à partir du même liant et du même solvant. La première couche A est épandue sur le collecteur de cuivre. La couche B est épandue sur un polypropylène (PP). Tout de suite après, la couche B est transférée sur la couche A par laminage. Les deux couches sont préparées à partir de PVDF ou de PTFE dissout dans le NMP ou dans du cyclopentanone.

Dans un second cas, les deux couches sont préparées à partir du liant soluble dans l'eau et le solvant utilisé est à 100% eau.

Dans les deux configurations, l'épaisseur de la couche A peut être supérieure ou inférieure à celle de la couche B.

D'autres procédés d'épandage peuvent être utilisés tel que l'épandage vertical sur grille de cuivre ("expanded metal"). La première couche A est épandue sur un film de cuivre. La deuxième couche B est étendue sur un film de PP. Puis cette dernière couche B est transférée sur la première couche A par laminage sans aucune déformation de la couche interne A.

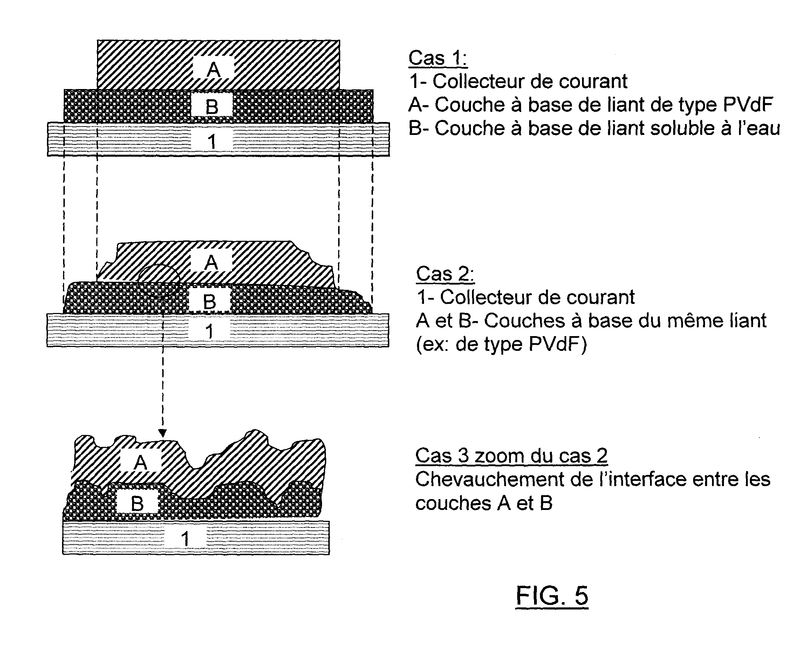

Selon un autre mode de réalisation avantageux, au moins une des couches de l'anode ou de la cathode, est déposée par des techniques physiques telle que: plasma, évaporation, pulvérisation, ou chimique telle que : CVD, "spin coating" ou autre technique (Figure 5).

Selon une autre variante préférentielle de l'invention, les particules du matériau multi-couches de la cathode (LiCoO₂, LiMn₂O₄, LiMn_{1/3}Co_{1/3}Ni_{2/3}O₂) sont enrobées par le matériau LiFePO₄ à l'aide de techniques de type méchanofusion, plasma, évaporation, pulvérisation, ou chimique telle que : CVD, "spin coating" ou autres techniques équivalentes.

De la même façon, le matériau de l'anode (graphite naturel ou artificiel ou carbone) est avantageusement enrobé par un des éléments: Li₄Ti₅O₁₂, Sn, Al, Ag, ou Si ou un mélange d'au moins deux de ces derniers.

Ces matériaux enrobés sont utilisés pour fabriquer la cathode ou l'anode avec un liant (binder) soit de type PVDF ou PTFE ou avec un liant soluble à l'eau.

### EXEMPLES

Les exemples suivants sont donnés à titre purement illustratifs et ne sauraient être interprétés comme constituant une quelconque limitation de l'objet de la présente invention.

### Exemple 1 - Matériau multi-couches LiCoO₂/LiFePO₄/AL

46,87 grammes de LiFePO₄, 3,01 grammes de noir de carbone, 1,42 grammes d'épaississant Cellogene® et 1,77 grammes de liant de type SBR sont mélangés dans l'eau.

L'épandage de 10 micromètres d'électrode est réalisé, sur un collecteur d'aluminium carboné, par Doctor Blade. Le film de LiFePO₄/Al obtenu constitue la première couche solide.

33,09 grammes de LiCoO₂, 2,12 grammes de noir de carbone et 4,80 grammes de PVDF sont mélangés dans du NMP (N-methyl pyrolidone).

L'épandage de LiCoO₂ cathode est effectué sur le film LiFePO₄/Al, la couche de LiCoO₂ présente une épaisseur de 40 micromètres, la cathode est à double couches, de type LiCoO₂/LiFePO₄/Al et appelée Configuration 1.

La constance mesurée pour l'épaisseur de la couche 1 est de 95 %. Il en est de même pour la couche solide 2.

### Exemple 2 - Matériau multi-couches LiN_{1/3}Co_{1/3}Mn_{1/3}O₂/LiFePO₄/AL

46,85 grammes de LiFePO₄, 3,05 grammes de noir de carbone, 1,45 grammes d'épaississant Cellogen^{®} et 1,78 grammes de liant de type SBR sont mélangés dans l'eau.

L'épandage de 10 micromètres de la première couche de LiFePO₄/Al est obtenu par Doctor Blade.

La deuxième couche est préparée à partir de 33,11 grammes de LiCo_{l/3}Ni_{1/3}Mn_{1/3}O₂, de 2,13 grammes de noir de carbone et de 83 grammes de PVDF mélangés dans du NMP. La deuxième couche est déposée par Doctor Blade sur la première couche de LiFePO₄/Al. La deuxième couche présente une épaisseur de 40 micromètres.

Le matériau multi-couches ainsi obtenu est de type LiN_{1/3}Co_{1/3}Mn_{1/3}O₂/LiFePO₄/AL et est appelé Configuration 2.

La constance mesurée pour l'épaisseur de la couche 1 est de 95 %.. Il en est de même pour la couche solide 2.

### Exemple 3 - Matériau multi-couches Graphite:SNG12/Li₄TiO₁₂/Cuivre

46,81 grammes de Li₄Ti₅O₁₂, 3 grammes de noir de carbone et 1,43 grammes d'épaississant avec 1,75 grammes de liant de type SBR sont mélangés dans l'eau. L'électrode est épandue par Doctor blade sur un collecteur de cuivre. L'épaisseur de la première couche de Li₄Ti₅O₁₂ est de 10 micromètres.

33,12 grammes de graphite naturel SNG12 avec 1,06 grammes de noir de carbone, 4,80 grammes de PVDF sont mélangés dans le solvant NMP.

La deuxième couche de graphite est déposée sur Li₄Ti₅O₁₂/cuivre par Doctor Blade. L'épaisseur de la deuxième couche est de 50 micromètres. La configuration Graphite SNG12/Li₄TiO₁₂/Cuivre est appelée Configuration 3.

La constance mesurée pour l'épaisseur de la couche 1 est de 95 %. Il en est de même pour la couche solide 2.

### Exemple 4 - Matériau multi-couches Li₄Ti₅O₁₂/SNG12/Cuivre

33,15 grammes de graphite naturel, 1,05 grammes de noir de carbone, 4,83 grammes de PVDF sont mélangés dans le solvant NMP. La première couche de graphite est épandue par Doctor Blade sur un collecteur de cuivre. L'épaisseur de la première couche ainsi obtenue est de 45 micromètres.

33,12 grammes de Li₄Ti₅O₁₂ + 3,12 grammes de noir de carbone, 1,42 grammes d'épaississant de type Cellogene® + 1,774 grammes de liant de type SBR sont mélangés dans l'eau.

L'épandage de la deuxième couche est fait par Doctor Blade sur la première couche graphite/cuivre; l'épaisseur de la deuxième couche est de 10 micromètres. La configuration Li₄Ti₅O₁₂/SNG12/Cuivre obtenue est appelée Configuration 4.

L'épaisseur de la couche 1 est de 45 plus ou moins 2 micromètres ce qui correspond à une constance de 95,6 %.

### Exemple 5 - Batterie lithium avec matériau multi-couches selon la Configuration 1

Une pile de type Configuration1/LiPF₆/EC+DEC/Li est chargée jusqu'à 12 volts. La température de la batterie est montée à 75°C et revient à 25°C après 1 minute.

### Exemple 6 - Batterie de type Configuration 2

Une pile de type LiCOO₂/LiPF₆/EC+DEC/Li est chargée jusqu'à 12 volts, la température est portée jusqu'à 150°C et revient à 60°C après 1 minutes.

### Exemple 7 - Batterie lithium Configuration 1/LiPF₆/EC+DEC/Configuration 3

Une pile de type Configuration 1/LiPF₆/EC+DEC/Configuration 2 est chargée en 2 C (30 minutes) et on maintient le voltage à 4,2 Volts pendant 24 heures.

Aucune dendrite ou dépôt de lithium n'est détecté sur l'anode de (Configuration 3).

### Exemple 8 - Batterie lithium Configuration 2/LiPF₆/Configuration 4

Une pile de type Configuration 2/LiPF₆/Configuration 4 est chargée en 2C (30 minutes) et on maintien le voltage à 4,3 Volts pendant 24 heures.

Aucun dendrite ou dépôt de lithium n'est observé sur l'anode (Configuration 4).

### Exemple 9 - Batterie LiCoO₂/LiPF₆/Graphite

Une pile de type LiCoO₂/LiPF₆/Graphite dans laquelle les matériaux d'électrode sont de type simple couche, est chargée en 2 C (30 minutes) et maintenue à 4,2 Volts pendant 24 heures.

Dans cette pile, la formation d'un dépôt de lithium est observée sur l'anode.

Un des avantages déterminant des matériaux multi-couches de l'invention réside dans la résistance améliorée à la surcharge qu'ils confèrent aux générateurs dans lesquels ils sont incorporés comme élément constitutif d'électrode.

En présence de surcharges provoquées par des agents extérieurs, la cathode du générateur devient très acide et réagit avec l'électrolyte, en particules avec le sel, pour former des acides de type HF(LiPF₆) ou HCl(LiClO₄). Ces réactions de formation sont exothermiques, génèrent de l'oxygène à partir de LiCoO₂ et contribuent à accroître considérablement la température du générateur, les acides deviennent vapeur et réagissent avec les composants de batterie, jusqu'à déclencher du feu à l'intérieur du générateur.

L'utilisation des cathodes de type LiFePO₄, ou de pH très basiques, vient considérablement sécuriser la batterie, notamment en évitant la formation d'acide et en empêchant la génération d'oxygène.

Une autre possibilité d'optimiser encore la capacité de résistance à la surcharge réside dans l'enrobage des particules de matériau électrochimiquement actif par une couche d'un matériau très basique tel que Li₃PO₄ ou autres. Ceci évite notamment le contact acide de la cathode avec l'électrolyte lors de la charge.

De façon particulièrement intéressante, on utilise comme particules de matériau électrochimiquement actif, celles présentant un pH supérieur à 7, telles les particules de LiFePO₄ qui ont un pH de 9,9 et celles de LiCoO₂ qui ont un pH de 8,6.

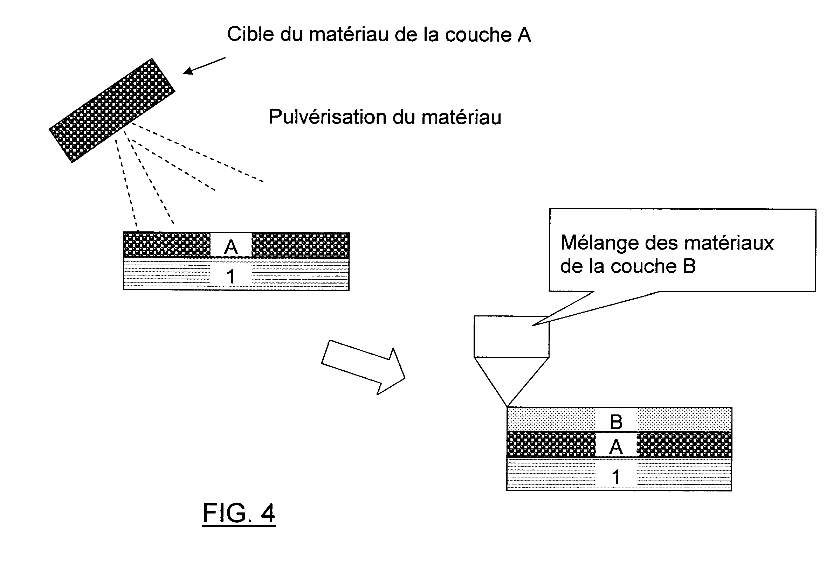

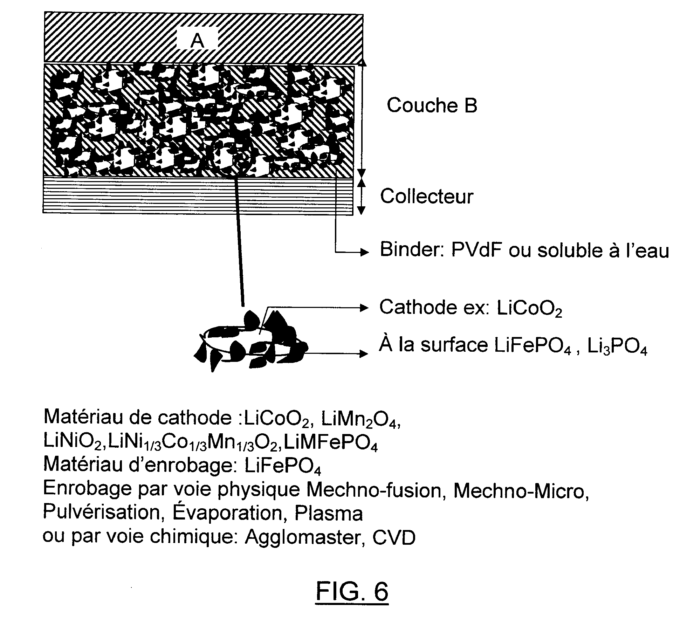

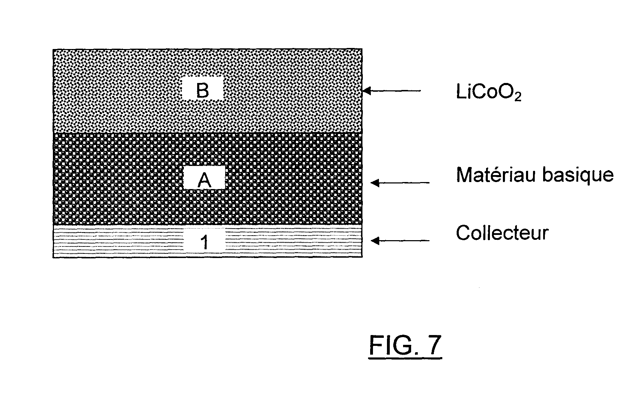

Les deux mécanismes possibles pour minimiser voir inhiber le phénomène indésirable de surcharge sont représentés dans les Figures 1 à 4 et 6 et 7.

Bien que la présente invention ait été décrite à l'aide de mises en oeuvre spécifiques, il est entendu que plusieurs variations et modifications peuvent se greffer auxdites mises en oeuvre, et la présente invention vise à couvrir de telles modifications, usages ou adaptations de la présente invention qui deviendra connue ou conventionnelle dans le champ d'activité dans lequel se retrouve la présente invention, et qui peut s'appliquer aux éléments essentiels mentionnés ci-haut.

## Revendications

1. Matériau multicouche comportant un support solide et au moins deux couches solides superposées qui contiennent chacune des particules d'un matériau électrochimiquement actif et un liant, la première couche solide adhérant au support solide et la deuxième couche solide adhérant à la première couche solide, ledit matériau multicouche étant en outre **caractérisé en ce que** :
- il présente au moins une des propriétés suivantes : une épaisseur de la première couche solide qui, mesurée selon la méthode du microscope électronique à balayage, est constante à 95% et plus ; une épaisseur de la deuxième couche solide qui, mesurée selon la méthode du microscope électronique à balayage, est constante à 95% et plus ; et une profondeur moyenne de pénétration de la deuxième couche solide dans la première couche solide qui est inférieure à 10% de l'épaisseur de la première couche solide ;
- le liant dans la première couche est soluble, à 25°C, dans un solvant S₁ à une concentration supérieure à 1 g/l, et le liant dans la deuxième couche solide est soluble, à 25°C, dans le solvant S₁ à une concentration inférieure à 1 g/l ;
- le liant dans la deuxième couche est soluble, à 25°C, dans un solvant S₂ à une concentration supérieure à 1 g/l, et le liant dans la première couche est soluble, à 25°C, dans le solvant S₂ à une concentration inférieure à 1 g/l ;
- le liant de l'une des couches est soluble dans l'eau et le liant de l'autre couche est PVDF ou PTFE.

2. Matériau multicouche selon la revendication 1, dans lequel le liant présent dans une couche solide représente entre 2 et 55 % du poids de la couche solide.

3. Matériau multicouche selon l'une des revendications 1 à 2, **caractérisé en ce que** le matériau électrochimiquement actif est un oxyde complexe correspondant à la formule générale AₐMₘZ_{z}OₒNₙF_{f} dans laquelle :
- A comprend un métal alcalin;
- M comprend au moins un métal de transition, et optionnellement un métal autre qu'un métal de transition, ou leurs mélanges;
- Z comprend au moins un non-métal;
- O est l'oxygène et N l'azote et F le fluor; et
- les coefficients a, m, z, o, n, f ≥ 0 sont choisis de manière à assurer l'électroneutralité.

4. Matériau multicouche selon la revendication 1, **caractérisé en ce que** le matériau électrochimiquement actif de la première couche solide est différent du matériau électrochimiquement actif de la deuxième couche solide.

5. Matériau multicouche selon l'une quelconque des revendications 1 à 4, dans lequel au moins une des couches solides contient un épaississant, représentant de 5 à 30 % du poids de la couche solide qui le contient.

6. Matériau multicouche selon l'une quelconque des revendications 1 à 5, comportant une troisième couche d'un matériau solide de type Li₃PO₄ adhérant à la deuxième couche solide.

7. Matériau multicouche selon l'une quelconque des revendications 1 à 6, **caractérisé en ce qu'**il contient en outre un matériau conducteur électronique de type carbone, graphite, fibre, ou mélange d'au moins deux de ces derniers.

8. Matériau multicouche selon l'une des revendications 1 à 7 **caractérisé en ce que** :
- le matériau électrochimiquement actif de l'une des couches est choisi dans le groupe constitué par LiFePO₄, LiFePO₄ enrobé de carbone, FePO₄, FePO₄ enrobé de carbone, et leurs mélanges ;
- le matériau électrochimiquement actif de l'autre couche est choisi dans le groupe constitué par LiCoO₂, LiMn₂O₄, LiMn_{1/3}Co_{1/3}Ni_{1/3}O₂, LiNi_{X}Co_{Y}Al_{Z}O₂, (0 < x, y, z < 1), et leurs mélanges.

9. Matériau multicouche selon l'une des revendications 1 à 7, **caractérisé en ce que** le matériau électrochimiquement actif de l'une des couches est choisi parmi le graphite naturel, le type graphite artificiel et leurs mélanges, et le matériau électrochimiquement actif de l'autre couche est choisi parmi Li₄Ti₅O₁₂, Sn, Al, Ag, Si, SiOx, SiO_{X}-graphite, SiO_{X}-Carbone, et leurs mélanges, avec 0<x≤2.

10. Procédé de préparation d'un matériau multicouche selon l'une des revendications 1 à 9, ledit procédé comprenant les étapes suivantes :
a) épandage, sur un support solide, d'un mélange comprenant les particules d'un premier matériau électrochimiquement actif, un liant de ce premier matériau électrochimiquement actif et le solvant du liant;
b) évaporation du solvant présent dans la première couche après épandage, pour former la première couche solide;
c) épandage sur la première couche solide d'un mélange comprenant les particules d'un deuxième matériau électrochimiquement actif, un liant du deuxième matériau électrochimiquement actif, et un solvant du liant; et
d) évaporation du solvant présent dans la seconde couche après épandage, pour former la deuxième couche solide ;
le liant de l'une des couches étant soluble dans l'eau et le liant de l'autre couche étant PVDF ou PTFE.

11. Electrode constituée par un matériau multicouche selon la revendication 8 dans lequel le support solide est constitué d'un matériau choisi parmi l'aluminium, l'aluminium carboné, le titane et le platine, ladite électrode formant une cathode.

12. Electrode constituée par un matériau multicouche selon la revendication 9 dans lequel le support solide est constitué par du cuivre, de l'aluminium ou du nickel, ladite électrode formant une anode.

13. Electrode selon la revendication 11 ou 12, dans laquelle au moins un des matériaux électrochimiquement actif est enrobé par une couche d'un matériau basique.

14. Générateur électrochimique comprenant au moins une anode, au moins une cathode, et au moins un électrolyte, ledit générateur étant **caractérisé en ce qu'**il contient au moins une électrode selon la revendication 11 en tant que cathode et/ou au moins une électrode selon la revendication 12 en tant qu'anode.

## Patentansprüche

1. Mehrschichtmaterial, umfassend einen festen Träger und mindestens zwei übereinanderliegende feste Schichten, die jeweils Teilchen aus einem elektrochemisch aktiven Material und ein Bindemittel enthalten, wobei die erste feste Schicht an dem festen Träger haftet und die zweite feste Schicht an der ersten festen Schicht haftet, wobei das Mehrschichtmaterial außerdem **dadurch gekennzeichnet ist, dass**:
- es mindestens eine der folgenden Eigenschaften aufweist: eine Dicke der ersten festen Schicht, die, gemäß der Rasterelektronenmikroskopie-Methode gemessen, zu 95% und mehr konstant ist; eine Dicke der zweiten festen Schicht, die, gemäß der Rasterelektronenmikroskopie-Methode gemessen, zu 95% und mehr konstant ist; und eine durchschnittliche Penetrationstiefe der zweiten festen Schicht in der ersten festen Schicht, die weniger als 10% der Dicke der ersten festen Schicht beträgt;
- das Bindemittel in der ersten Schicht bei 25°C in einem Lösungsmittel S₁ in einer Konzentration von mehr als 1 g/l löslich ist und das Bindemittel in der zweiten Schicht bei 25°C in dem Lösungsmittel S₁ in einer Konzentration von weniger als 1 g/l löslich ist;
- das Bindemittel in der zweiten Schicht bei 25°C in einem Lösungsmittel S₂ in einer Konzentration von mehr als 1 g/l löslich ist und das Bindemittel in der ersten Schicht bei 25°C in dem Lösungsmittel S₂ in einer Konzentration von weniger als 1 g/l löslich ist;
- das Bindemittel der einen der Schichten in Wasser löslich ist und es sich bei dem Bindemittel der anderen Schicht um PVDF oder PTFE handelt.

2. Mehrschichtmaterial nach Anspruch 1, wobei das in einer festen Schicht vorliegende Bindemittel zwischen 2 und 55% des Gewichts der festen Schicht ausmacht.

3. Mehrschichtmaterial nach einem der Ansprüche 1 bis 2, **dadurch gekennzeichnet, dass** es sich bei dem elektrochemisch aktiven Material um ein komplexes Oxid handelt, das der allgemeinen Formel AₐMₘZ_{z}OₒNₙF_{f} entspricht, wobei:
- A ein Alkalimetall umfasst;
- M mindestens ein Übergangsmetall und gegebenenfalls ein von einem Übergangsmetall verschiedenes Metall oder Mischungen davon umfasst;
- Z mindestens ein Nichtmetall umfasst;
- 0 für Sauerstoff steht und N für Stickstoff steht und F für Fluor steht; und
- die Koeffizienten a, m, z, o, n und f ≥ 0 so gewählt sind, dass Elektroneutralität gewährleistet ist.

4. Mehrschichtmaterial nach Anspruch 1, **dadurch gekennzeichnet, dass** das elektrochemisch aktive Material der ersten festen Schicht von dem elektrochemisch aktiven Material der zweiten festen Schicht verschieden ist.

5. Mehrschichtmaterial nach einem der Ansprüche 1 bis 4, wobei mindestens eine der festen Schichten ein Verdickungsmittel enthält, das 5 bis 30% des Gewichts der festen Schicht, die es enthält, ausmacht.

6. Mehrschichtmaterial nach einem der Ansprüche 1 bis 5, umfassend eine dritte Schicht aus einem festen Material vom Li₃PO₄-Typ, die an der zweiten festen Schicht haftet.

7. Mehrschichtmaterial nach einem der Ansprüche 1 bis 6, **dadurch gekennzeichnet, dass** es außerdem ein elektronenleitendes Material vom Kohlenstoff-, Graphit- oder Fasertyp oder eine Mischung von mindestens zwei dieser Letzteren enthält.

8. Mehrschichtmaterial nach einem der Ansprüche 1 bis 7, **dadurch gekennzeichnet, dass**:
- das elektrochemisch aktive Material einer der Schichten aus der Gruppe bestehend aus LiFePO₄, mit Kohlenstoff beschichtetem LiFePO₄, FePO₄, mit Kohlenstoff beschichtetem FePO₄ und Mischungen davon ausgewählt ist;
- das elektrochemisch aktive Material der anderen Schicht aus der Gruppe bestehend aus LiCoO₂, LiMn₂O₄, LiMn_{1/3}Co_{1/3}Ni_{1/3}O₂, LiNi_{X}Co_{Y}Al_{Z}O₂ (0 < x, y, z < 1) und Mischungen davon ausgewählt ist.

9. Mehrschichtmaterial nach einem der Ansprüche 1 bis 7, **dadurch gekennzeichnet, dass** das elektrochemisch aktive Material eine der Schichten aus Naturgraphit, Kunstgraphit und Mischungen davon ausgewählt ist und das elektrochemisch aktive Material der anderen Schicht aus Li₄Ti₅O₁₂, Sn, Al, Ag, Si, SiO_{X}, SiO_{X}-Graphit, SiO_{X}-Kohlenstoff und Mischungen davon mit 0 < x ≤ 2 ausgewählt ist.

10. Verfahren zur Herstellung eines Mehrschichtmaterials nach einem der Ansprüche 1 bis 9, wobei das Verfahren folgende Schritte umfasst:
a) Aufbringen einer Mischung, die Teilchen aus einem ersten elektrochemisch aktiven Material, ein Bindemittel für dieses erste elektrochemisch aktive Material und das Lösungsmittel für das Bindemittel umfasst, auf einen festen Träger;
b) Verdampfen des nach dem Aufbringen in der ersten Schicht vorliegenden Lösungsmittels zur Bildung der ersten festen Schicht;
c) Aufbringen einer Mischung, die Teilchen aus einem zweiten elektrochemisch aktiven Material, ein Bindemittel für das zweite elektrochemisch aktive Material und ein Lösungsmittel für das Bindemittel umfasst, auf die erste feste Schicht;
d) Verdampfen des nach dem Aufbringen in der zweiten Schicht vorliegenden Lösungsmittels zur Bildung der zweiten festen Schicht;
wobei das Bindemittel der einen der Schichten in Wasser löslich ist und es sich bei dem Bindemittel der anderen Schicht um PVDF oder PTFE handelt.

11. Elektrode aus einem Mehrschichtmaterial nach Anspruch 8, wobei der feste Träger aus einem aus Aluminium, kohlenstoffbeschichtetem Aluminium, Titan und Platin ausgewählten Material besteht, wobei die Elektrode eine Kathode bildet.

12. Elektrode aus einem Mehrschichtmaterial nach Anspruch 9, wobei der feste Träger aus Kupfer, Aluminium oder Nickel besteht, wobei die Elektrode eine Anode bildet.

13. Elektrode nach Anspruch 11 oder 12, wobei mindestens eines der elektrochemisch aktiven Materialien mit einer Schicht aus einem basischen Material beschichtet ist.

14. Elektrochemischer Generator, umfassend mindestens eine Anode, mindestens eine Kathode und mindestens einen Elektrolyt, wobei der Generator **dadurch gekennzeichnet ist, dass** er mindestens eine Elektrode nach Anspruch 11 als Kathode und/oder mindestens eine Elektrode nach Anspruch 12 als Anode enthält.

## Claims

1. Multilayer material comprising a solid support and at least two superposed solid layers which each contain particles of an electrochemically active material and a binder, the first solid layer adhering to the solid support and the second solid layer adhering to the first solid layer, said multilayer material being further **characterized in that**:
- it has at least one of the following properties: a thickness of the first solid layer which, measured using the scanning electron microscope method, is constant to 95% and higher; a thickness of the second solid layer which, measured using the scanning electron microscope method, is constant to 95% and higher; and an average depth of penetration of the second solid layer into the first solid layer which is less than 10% of the thickness of the first solid layer;
- the binder in the first layer is soluble at 25°C in a solvent S₁ with a concentration of greater than 1 g/l and the binder in the second solid layer is soluble at 25°C in the solvent S₁ with a concentration of less than 1 g/l;
- the binder in the second layer is soluble at 25°C in a solvent S₂ with a concentration of greater than 1 g/l and the binder in the first layer is soluble at 25°C in the solvent S₂ with a concentration of less than 1 g/l;
- the binder in one of the layers is water-soluble and the binder in the other layer is PVDF or PTFE.

2. Multilayer material according to Claim 1, in which the binder present in a solid layer represents between 2 and 55% of the weight of the solid layer.

3. Multilayer material according to either of Claims 1 and 2, **characterized in that** the electrochemically active material is a complex oxide corresponding to the general formula AₐMₘZ_{z}OₒNₙF_{f} in which:
- A comprises an alkali metal;
- M comprises at least one transition metal, and optionally a metal other than a transition metal, or mixtures thereof;
- Z comprises at least one nonmetal;
- 0 is oxygen; N is nitrogen and F is fluorine; and
- the coefficients a, m, z, o, n, f ≥ 0 are chosen so as to ensure electroneutrality.

4. Multilayer material according to Claim 1, **characterized in that** the electrochemically active material of the first solid layer is different from the electrochemically active material of the second solid layer.

5. Multilayer material according to any one of Claims 1 to 4, in which at least one of the solid layers contains a thickener representing from 5 to 30% of the weight of the solid layer containing it.

6. Multilayer material according to any one of Claims 1 to 5, which includes a third layer of a solid material of the Li₃PO₄ type adhering to the second solid layer.

7. Multilayer material according to any one of Claims 1 to 6, **characterized in that** it further contains an electronically conductive material of the carbon, graphite or fibre type, or a mixture of at least two of the latter.

8. Multilayer material according to any one of Claims 1 to 7, **characterized in that**:
- the electrochemically active material of one of the layers is selected from the group consisting of LiFePO₄, carbon-coated LiFePO₄, FePO₄, carbon-coated FePO₄ and their mixtures; and
- the electrochemically active material of the other layer is selected from the group consisting of LiCoO₂, LiMn₂O₄, LiMn_{1/3}Co_{1/3}Ni_{1/3}O₂, LiNiₓCo_{y}Al_{z}O₂, (0 < x, y, z < 1) and their mixtures.

9. Multilayer material according to any one of Claims 1 to 7, **characterized in that** the electrochemically active material of one of the layers is selected from natural graphite, artificial graphite and their mixtures, and the electrochemically active material of the other layer is selected from Li₄Ti₅O₁₂, Sn, Al, Ag, Si, SiOₓ, SiOₓ-graphite, SiOₓ-carbon and their mixtures, with 0 < x ≤ 2.

10. Process for preparing a multilayer material according to any one of Claims 1 to 9, said process comprising the following steps:
a) coating, on a solid support, of a mixture comprising the particles of a first electrochemically active material, a binder for this first electrochemically active material and the solvent for the binder;
b) evaporation of the solvent present in the first layer after the coating so as to form the first solid layer;
c) coating, on the first solid layer, of a mixture comprising the particles of a second electrochemically active material, a binder for the second electrochemically active material and a solvent for the binder; and
d) evaporation of the solvent present in the second layer after the coating so as to form the second solid layer;
the binder of one of the layers being water-soluble and the binder of the other layer being PVDF or PTFE.

11. Electrode formed by a multilayer material according to Claim 8, in which the solid support is formed of a material selected from aluminium, carbon-coated aluminium, titanium and platinum, said electrode forming a cathode.

12. Electrode formed by a multilayer material according to Claim 9, in which the solid support is formed of copper, aluminium or nickel, said electrode forming an anode.

13. Electrode according to Claim 11 or 12, in which at least one of the electrochemically active materials is coated with a layer of a basic material.

14. Electrochemical generator comprising at least one anode, at least one cathode, and at least one electrolyte, said generator being **characterized in that** it contains at least one electrode according to Claim 11 by way of cathode and/or at least one electrode according to Claim 12 by way of anode.
